(19)

**Europäisches Patentamt**

**European Patent Office**

**Office européen des brevets**

(11) **EP 4 700 093 A1**

(12) **EUROPEAN PATENT APPLICATION**

(43) Date of publication:
**25.02.2026 Bulletin 2026/09**

(21) Application number: **24306380.7**

(22) Date of filing: **20.08.2024**

(51) International Patent Classification (IPC):
***C09D 5/02*** *(2006.01)* ***C09D 7/61*** *(2018.01)*
***C09D 7/40*** *(2018.01)*

(52) Cooperative Patent Classification (CPC):
**C09D 7/61; C09D 5/028; C09D 7/69; C09D 7/70;**
C08K 3/34; C08K 3/36; C08K 7/26;
C08K 2003/2241; C08K 2201/003

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **ImerTech SAS**
**75015 Paris (FR)**

(72) Inventor: **Esteva, Hugo**
**Toulouse (FR)**

(74) Representative: **Haseltine Lake Kempner LLP**
**One Portwall Square**
**Portwall Lane**
**Bristol BS1 6BH (GB)**

(54) **IMPROVEMENTS IN OR RELATING TO THE DURABILITY OF PAINTS**

(57) A paint formulation comprising expanded milled perlite present from 5 wt% to 20 wt%, titanium dioxide present from 5 wt% to 20 wt%, each based on the total weight of the paint formulation, and a binder, and having a PVC/CPVC ratio of at least 0.9; and the use of expanded milled perlite in paint formulations containing titanium dioxide to improve the UV durability, and as a titanium dioxide extender.

**EP 4 700 093 A1**

**Description**

**TECHNICAL FIELD**

The present invention relates to improvements in or relating to paint and in particular to improving the durability of paints especially those paints that are used as exterior paints where they are subject to external and natural effects such as those caused by the weather for example sunlight and rain or snow. In particular the invention provides an exterior paint with improved resistance to ultra violet light and hence having a longer durability by retaining its colour (avoiding or reducing fading) and resisting chalking upon exposure to exterior conditions particularly sunlight.

**BACKGROUND**

A paint typically comprises four important categories of components plus other ancillary materials. Each of the four categories provides an essential property to the paint. The paint contains a liquid diluent or solvent to enable the paint to flow when it is applied and to provide a matrix that secures in place the other components of the paint. The liquid must be removable such as by evaporation after the paint has been applied to the surface for which it is designed in order to leave a dry coherent coating on the surface.

A paint will also contain filler components, including minerals, which can be pigments which serve to ensure that the paint coating on the surface to which it is applied has the desired colour. In certain instances the minerals when used as fillers can alternatively or additionally provide protective properties to the final coating derived from the paint. Paints also require a binder that holds the various components together within the liquid paint and also disperses and retains the components in place during the drying of the paint after application to create the required coherent coating. Paints may also contain a range of additives which help with the bulk of the paint, its ability to wet the surfaces to which they are applied and also to provide storage stability. Titanium dioxide (TiOz) is a common ingredient for paints and this invention relates to improving the performance of titanium dioxide paints and also enabling desirable performance whilst replacing a portion of the titanium dioxide with perlite allowing a reduction in the amount of the expensive titanium dioxide used in the paint.

The volume of pigment there is in a paint compared to the amount of binder employed is important according to the nature and expected application of the paint, the nature of the binder and also the nature of the pigment. The pigment volume concentration (sometimes known as the PVC) determines how much pigment there is in relation to the amount of binder according to the formula

$$PVC\ \% = 100 \times (Volume\ of\ Pigments)\ /\ (Volume\ of\ Pigments + Volume\ of\ Binder)$$

The PVC has an impact on the properties of the final paint coating such as opacity, sheen, type of finish and mechanical resistance.

The Critical Pigment Volume Concentration (CPVC) is a measure of the amount of binder which is sufficient to hold the system together by for example wetting the pigment and also filling interstitial voids between the particles in the formulation. Accordingly if the PVC is larger than the CPVC its coating will be porous due to insufficient binder to fill the interstitial voids, it is therefore preferred that the ratio of CPVC to PVC is close to or greater than 1 particularly greater than 0.95 or 0.9.

Accordingly a typical paint comprises:

i) a pigment which acts as a colouring agent and is insoluble in the surrounding media, a typical pigment comprises $TiO_2$.
ii) a filler which provides technical properties and may influence optical properties, typical fillers comprise calcium carbonate, talc, kaolin, clay
iii) other additives such as thickeners, detergents, wetting agents, biocides etc
iv) a binder to retain the particulate materials dispersal and also enables film formation when the paint is applied to a surface; typical binders include polymers such as vinyl polymers, acrylic polymers, styrenic polymers, polyurethanes, polyethers, polyesters, and combinations thereof.

Accordingly, when the PVC of the paint is lower, such as below the CPVC, the binder is present as an excess which surrounds the pigments and fillers to give a continuous layer of the binder with the binder providing the surface finish to the paint which is typically shiny and non-porous. As the PVC increases the solid particles become closer together and the volume of binder decreases resulting in a greater matt appearance of the paint. As the PVC increases the porosity of the paint increases. It is therefore preferred that the ratio of PVC/CPVC in the paints of this invention is at least 1.0 or 0.95, most preferably at least 0.9.

Exterior coatings are subject to a variety of conditions particularly weather conditions such as temperature extremes, sunlight, light and heavy rains, ice and snow which can cause deterioration of the paint coating resulting in discolouration and the appearance of defects such as chalking. The most damaging exposure being to solar radiation particularly ultra-violet radiation.

UV-A radiation is particularly damaging as it can initiate chemical reactions in components of the paint formulation resulting in loss of colour and changes in the properties of the paints such as degrading pigments and dyes, yellowing of the paint coating, chalking and maybe a loss of shine and gloss.

## SUMMARY

According to a first aspect, there is provided the use of expanded milled perlite having a D50 of at least 10 or 15 or 20 or 25 or 30 $\mu$m and at most 50 or 45 or 40 or 35 or 30 $\mu$m, preferably from 10 to 30 $\mu$m, as an additive in paint based on titanium dioxide in order to improve the UV durability of the paint.

According to a second aspect, there is provided formulation comprising:

i) from 5 wt % to 20 wt % preferably from 8 wt% to 15 wt% or 10 wt % to 15 wt % of titanium dioxide;
ii) from 5 wt % to 20 wt % preferably from 8 wt % to 15 wt % or 10 wt% to 15 wt% of the expanded milled perlite as described herein; and
iii) a binder;

wherein the formulation has a PVC/CPVC ratio of at least 0.9 or preferably at least 0.95 or more preferably at least 1.0.

According to a third aspect, there is provided an article comprising a substrate and a coating on a surface of the substrate, wherein the coating comprises the formulation according to the second aspect.

## FIGURES

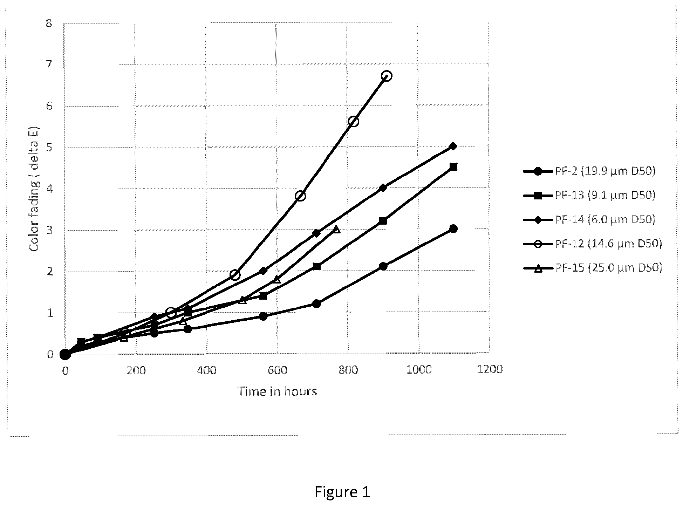

Figure 1 provides Q-UV test results showing $\Delta$E evolution in time after UV exposure and condensation cycles for mineral formulations in Example 1.

## DETAILED DESCRIPTION

The present invention increases the UV stability of paints, particularly exterior paints in this application. The extent of UV degradation of a paint is tested using a Q-UV device which is an accelerated weathering tester device which simulates the exposure to UV radiation of coatings such as exterior paints. The QUV accelerated weathering tester available from Q-Lab Corporation reproduces the damage caused by conditions such as sunlight, rain and dew. The paints were subjected to such QUV accelerated weathering tests using the above equipment according to the ISO 11507:2007 standard and the testing was performed on steel panels coated with a blue exterior paint. During such weathering tests, Delta E was measured for the paints, according to the method described below, in which the L*a*b* were monitored over time at 60°C and 85°C; allowing tracking of the colour variations over time.

Colour measurement (Delta E)

Delta E is a measurement that represents the amount of change of the colour over time and it is calculated herein using a spectrophotometer having model name Spectro Guide Sphere Gloss (BYK) which translates a colour into three variables known as CIE L*a*b* where L* is the lightness, a* is the red-green colour and b* is the yellow blue. The greater the value for Delta E in the test over time the less stable the material.

Colour was measured herein using the standard method ISO 7724-3.

Gloss measurement

Gloss was measured herein using the standard method ISO 2813:2014 using a Micro-tri-gloss (Byk) glossmeter. The method consists of measuring the gloss at different angles (20° for glossy paints, 60° and 85° for matte paints), that is to say that the device is capable of measuring the rate of ray reflected by the paint.

The measurements were made by contacting the glossmeter to the paint surfaces, and measurements were made at different points (locations) of the paint in order to obtain an average representative of the paint sample.

Chalking measurement

Chalking was measured herein using standard method ISO 4628-6.

Chalking is the appearance of a loosely adherent fine powder on the surface of a paint, resulting from the degradation of one or more of its constituents. Chalking mainly appears after outdoor exposure or during accelerated UV exposure. The objective of this test is to determine the degree of chalking of paints using the tape method.

To carry out this test the following standardized adhesive is used: transparent pressure sensitive tape, 50 mm width, Klebaband Scotch.

The adhesive tape is applied to the surface of the paint film and removed, at an angle of 45°, 1 minute after application. Secondly, the adhesive tape is then placed on a white support in order to make a visual assessment of powder adhered to the adhesive tape which corresponds to the degradation of the paint.

Various minerals are employed in paint formulations, titanium dioxide (TiOz) being a particularly preferred mineral. However, TiOz is an expensive material and furthermore it is subject to degradation by ultra-violet light. Accordingly an aim of the present invention is to provide a paint suitable for use as an exterior coating requiring a reduced amount of TiOz and which also has an improved or at least only slightly diminished but still acceptable UV durability.

We have found that this aim may be achieved if the mineral expanded milled perlite is included in the formulation and in particular if the expanded milled perlite of a particular particle size is included in a paint and having a particular PVC/CPVC ratio.

Perlite is a naturally occurring silicate based mineral which has been proposed for use in and has been used in coatings such as paint which may contain TiOz. See for example Chinese Patent Application CN/060700695A and Korean Patent KR 1023 86826 B. In its natural state perlite contains water and it can be expanded by heating to temperatures around 850°C or higher to vaporise the water to expand the perlite to several times its original volume. The present invention is particularly concerned with the use of perlite, which is expanded , and which has been milled to a particular size to increase the UV durability of paints particularly exterior paints based on TiOz (expanded milled perlite).

We have found that the particle size of the expanded milled perlite influences its ability to enhance the UV durability of coatings particularly exterior paints based on TiOz. The expanded perlite should therefore be milled to the desired particle size which we have found to be a D50 particle size of at least 10 or 15 or 20 or 25 or 30 microns ($\mu$m); and at most 50 or 45 or 40 or 35 or 30 $\mu$m, preferably from 10-40 or 10-30 or 10-25 or 15 - 25 $\mu$m. The expanded milled perlite also has D95 particle size of at most 75 or 70 or 65 $\mu$m, preferably at most 65 $\mu$m. If the expanded milled perlite is too coarse, such as having a D50 greater than 50 and/or a D95 value greater than 100, it can negatively affect other properties of the paint, including general aesthetics and a rougher surface which can lead to dirt pick-up and retention.

The particle size and particle size distribution of the expanded milled perlite used according to this invention, including for each of the examples, is determined by wet laser diffraction analysis such as by that determined by employing the Malvern Panalytical Mastersizer instrument as supplied by Malvern Instruments Ltd (or by other methods which give essentially the same result). The principle of laser particle size analysis with the Malvern Panalytical Mastersizer is based on laser light diffraction. As measured herein, sample particles are dispersed in a water stream, and a laser beam passes through the dispersed sample. Particles diffract laser light at specific angles depending on their size, which is detected by sensors. The collected data is then analyzed using algorithms based on Mie or Fraunhofer theory to determine the particle size distribution. Such a machine provides measurements and a plot of the cumulative percentage by volume of particles having a size, referred to in the art as the 'equivalent spherical diameter' (e.s.d), less than given e.s.d values. The mean particle size d50 is the value determined in this way of the particle e.s.d at which there are 50% by volume of the particles which have an equivalent spherical diameter less than that d50 value.

As mentioned paint formulations may be aqueous or solvent based and may contain several components, and examples of components other than the expanded milled perlite and titanium dioxide used according to the invention are calcium carbonate, and polymeric binders such as vinyl polymers, acrylic polymers, styrenic polymers, polyurethanes, polyethers, polyesters, and combinations thereof. We have found that the use of the expanded milled perlite according to this invention enhances the UV durability of coatings obtained from such paints.

The present invention therefore provides the use of the expanded milled perlite as described herein as an additive in paint based on titanium dioxide in order to improve the UV durability of the paint.

In a further embodiment the invention provides the use in a paint of the expanded milled perlite as described herein as an extender for titanium dioxide.

In a further embodiment the invention provides a formulation containing:

i) from 5 wt % to 20 wt % preferably from 8 wt% to 15 wt% or 10 wt % to 15 wt % of titanium dioxide;
ii) from 5 wt % to 20 wt % preferably from 8 wt % to 15 wt % or 10 wt% to 15 wt% of the expanded milled perlite as described herein; and
iii) a binder;

wherein the formulation has a PVC/CPVC ratio of at least 0.9 or preferably at least 0.95 or more preferably at least 1.0.

In a further embodiment, the invention provides an article comprising a substrate and a coating on a surface of the substrate, wherein the coating comprises the formulations as described herein. The $\Delta E$ value, measured as described herein, of the coating on the substrate is 3 or less or 2 or less, preferably 1.5 or less. The chalking value, measured as described herein, of the coating on the substrate is 2 or less, preferably 1 or less.

The formulation may be an aqueous emulsion or may be a solution in a liquid carrier.

The invention is illustrated by reference to the following Examples in which the test methods employed are those referred to previously.

Example 1

Exterior paint formulations PF-1 to PF-11, each separately containing the Minerals 1-11 (see Table 1), were prepared in accordance with the following recipe and each formulation had a PVC/cPVC ratio of around 1.3.

| | | |
|---|---|---|
| i) | Water and additives | 23.5-24.1 wt % |
| ii) | Vinyl acetate polymeric binder (Product name: Mowilith LDM 1852 obtained from Celanese Corporation) | 18.8-25.6 wt % |
| iii) | $TiO_2$ (Product name Kronos 2310, obtained from Kronos Worldwide Inc.) | 20.0-23.4 wt % |
| iv) | Ground calcium carbonate (D50 = 5 $\mu$m) | 20.0-23 wt % |
| v) | Minerals 1-11 (see Table 1) | 6.8-13.0 wt % |

The paint formulations PF-1 to PF-11 were then subjected to QU-V weathering testing for 700 hours in accordance with the method described herein, and the weathering stability assessed by measuring the $\Delta E$ and chalking values following the methods as described herein, The $\Delta E$ and chalking values are set out in Table 2 below.

TABLE 1

| Mineral Number | Mineral Type | D50 |
|---|---|---|
| 1 | Wollastonite | 6.2 |
| 2 | Expanded Milled Perlite | 19.9 |
| 3 | Mica | 19.4 |
| 4 | Talc/Chlorite | 5.7 |
| 5 | Talc | 3.5 |
| 6 | Chlorite | 9.5 |
| 7 | Hydrous Kaolin | 0.7 |
| 8 | Calcined Kaolin | 1.9 |
| 9 | Flash calcined Kaolin | 1.3 |
| 10 | Leucophyllite | 38.3 |
| 11 | Strontium carbonate | 4.2 |

TABLE 2

| Paint Formulation Number | Mineral Type | $\Delta E$ Value | Chalking Value |
|---|---|---|---|
| PF-1 | Wollastonite | 2.8 | 4 |
| PF-2 | Expanded Milled Perlite | 1.2 | 1 |
| PF-3 | Mica | 2.1 | 3 |
| PF-4 | Talc/Chlorite | 2.8 | 1 |
| PF-5 | Talc | 3.4 | 3 |

(continued)

| Paint Formulation Number | Mineral Type | ΔE Value | Chalking Value |
|---|---|---|---|
| PF-6 | Chlorite | 8 | 4 |
| PF-7 | Hydrous Kaolin | 4.6 | 4 |
| PF-8 | Calcined Kaolin | 3.7 | 2 |
| PF-9 | Flash calcined Kaolin | 4.2 | 5 |
| PF-10 | Leucophyllite | 4 | 4 |
| PF-11 | Strontium carbonate | 3 | 2 |

The lower the ΔE and chalking values the more stable the paint. Accordingly, the data shows that the use of the milled expanded perlite (Mineral 2) provides the greatest stability.

Expanded Perlite was then ground to form additional expanded milled perlites (Minerals 12 through 15). Table 3 below includes the particle size distribution values for Minerals 2 and 12 -15, measured by the laser diffraction method as described herein.

TABLE 3

| Mineral Number | Mineral Type | D25, μm | D50, μm | D75, μm | D95, μm |
|---|---|---|---|---|---|
| 2 | Expanded Milled Perlite | 10.3 | 19.9 | 34.5 | 64.2 |
| 12 | Expanded Milled Perlite | 7.8 | 14.6 | 25.5 | 50.0 |
| 13 | Expanded Milled Perlite | 5.3 | 9.1 | 15.2 | 31.4 |
| 14 | Expanded Milled Perlite | 3.5 | 6.2 | 8.5 | 14.0 |
| 15 | Expanded Milled Perlite | 10.8 | 25.0 | 35.6 | 68.0 |

Exterior paint formulations PF-12 to PF-15, each separately containing the Minerals 12-15 (see Table 3), were prepared in accordance with the following recipe and each formulation had a PVC/cPVC ratio of around 1.3.

| | | |
|---|---|---|
| i) | Water and additives | 23.5-24.1 wt % |
| ii) | Vinyl acetate polymeric binder (Product name: Mowilith LDM 1852 obtained from Celanese Corporation) | 18.8-25.6 wt % |
| iii) | $TiO_2$ (Product name Kronos 2310, obtained from Kronos Worldwide Inc.) | 20.0-23.4 wt % |
| iv) | Ground calcium carbonate (D50 = 5 μm) | 20.0-23 wt % |
| v) | Minerals 12-14 (see Table 3) | 6.8-13.0 wt % |

The paint formulations PF-12 to PF-15, including Minerals 12-15, respectively, were then subjected to QU-V weathering testing for 700 hours in accordance with the method described herein, and the weathering stability assessed by measuring the ΔE and chalking values following the methods as described herein, The ΔE and chalking values are set out in Table 4 below.

Table 4

| Paint Formulation Number | D50, μm | ΔE Value | Chaikin g Value |
|---|---|---|---|
| PF-2 | 19.9 | 1.2 | 1 |
| PF-12 | 14.6 | 3.2 | 1 |
| PF-13 | 9.1 | 2.1 | 2 |
| PF-14 | 6.2 | 2.9 | 2 |
| PF-15 | 25.0 | 1.8 | 1 |

The results of the Q-UV tests on the above formulations PF-2 and PF-12 to PF-15 containing the five Minerals 2 and 12 to 15, respectively, are also shown in Figure 1 hereto showing the D50 of PF-2 containing expanded milled perlite with a D50 of 19.9 μm (Mineral 2) to have the greatest impact on the UV stability of the formulation.

Example 2

Example 1 was repeated except that an acrylic resin and a styrenic resin in the following formulations were used as binders as well as the VAE resin used in Example 1.

Table 5

| Formulation | Paint A wt% | Paint B wt% | Paint C wt% |
|---|---|---|---|
| Water & additives | 20.8 | 20.8 | 20.8 |
| TiO2 | 20 | 20 | 20 |
| Calcium carbonate (D50 = 5 μm) | 21.5 | 21.5 | 21.5 |
| Mineral tested (2, 3, 4, 7, 8, 10, see Table 6) | 11.2 | 11.2 | 11.2 |
| VAE (Mowilith LDM 1852) Binder | 23.8 | - | - |
| Acrylic (Mowilith LDM 7717) Binder | - | 23.8 | - |
| Styrene acrylic (Mowilith LDM 6119) Binder | - | - | 23.8 |
| Total | 100.0 | 100.0 | 100.0 |

Mowilith is a Registered Trade Mark of Celanese Corporation.
The results after 700 hours in the QV-A test were as follows in Table 6.

Table 6

| Mineral | Paint A | | Paint B | | Paint C | |
|---|---|---|---|---|---|---|
| | ΔE | Chalking | ΔE | Chalking | ΔE | Chalking |
| 2 | 1.2 | 1 | 2.3 | 2 | 3.7 | 3 |
| 3 | 2.1 | 3 | 3.7 | 4 | 4.6 | 5 |
| 4 | 2.8 | 1 | 1.9 | 4 | 5.9 | 5 |
| 7 | 5.5 | 4 | 5.3 | 4 | 5.5 | 5 |
| 8 | 4.2 | 5 | 2.7 | 2 | 5.4 | 5 |
| 10 | 4 | 4 | 2.6 | 4 | 3.8 | 5 |

In each instance, the Paint containing expanded milled perlite of D50 = 19.9 μm (Mineral 2) has the lowest (and therefore best) degradation as indicated by the ΔE and chalking.

**Example 3**

Paint formulations containing the following amounts of $TiO_2$ and expanded milled perlite (Mineral 2) were prepared and tested in QU-V weathering as described herein, for ΔE and chalking also as described herein.

| | |
|---|---|
| Paint D | 20% $TiO_2$ and 10% perlite |
| Paint E | 10% $TiO_2$ and 10% perlite |
| Paint F | 0% $TiO_2$ and 10% perlite |
| Paint G | 10% $TiO_2$ and 0% perlite |

The percentage of materials in the formulations were as follows:

Table 7

| Product | Paint D | Paint E | Paint F | Paint G |
|---|---|---|---|---|
| Water & additives | 20 | 19.7 | 20 | 23 |
| VAE binder | 27.3 | 28 | 28 | 17 |
| $TiO_2$ | 20 | 10 | 0 | 10 |
| Calcium carbonate (D50 = 5 $\mu$m | 20 | 30 | 40 | 47.3 |
| Mineral 2 - Expanded Milled Perlite | 10 | 10 | 10 | 0 |
| Total | 100.0 | 100.0 | 100.0 | 100.0 |
| Ratio PVC/cPVC | 1.15 | 1.14 | 1.15 | 1.12 |

And the test results are shown in Table 8 below.

Table 8

| Product | Paint D | Paint E | Paint F | Paint G |
|---|---|---|---|---|
| $TiO_2$ | 20 | 10 | 0 | 10 |
| Calcium carbonate | 20 | 30 | 40 | 47.3 |
| Mineral 2 - Expanded Milled Perlite | 10 | 10 | 10 | 0 |
| ΔE | 3.1 | 2.4 | 9 | 4.6 |
| Chalking | 2 | 1 | 4 | 2 |

As shown, the paint without $TiO_2$ does not perform well in UV resistance. This indicates that the expanded milled perlite (Mineral 2) does not absorb the UV energy and that it is indeed $TiO_2$ which plays this role.

It is notable that Paint G which does not contain expanded milled perlite (Mineral 2) but 10% $TiO_2$, is less efficient than Paint E with an equivalent level of expanded milled perlite (Mineral 2) and $TiO_2$.

This means that expanded milled perlite (Mineral 2) has a positive and boosting effect on $TiO_2$ as shown by Paint E which gives the best results; more efficient than Paint G with 10% $TiO_2$ and no expanded milled perlite (Mineral 2).

## Claims

1. The use of expanded milled perlite having a D50 of at least 10 or 15 or 20 or 25 or 30 $\mu$m and at most 50 or 45 or 40 or 35 or 30 $\mu$m, preferably from 10 to 30 $\mu$m, as an additive in paint based on titanium dioxide in order to improve the UV durability of the paint.

2. The use according to Claim 1 in which the expanded milled perlite has a D95 of at most 75 or at most 70 or at most 65 $\mu$m, preferably at most 65 $\mu$m.

3. The use in a paint of expanded milled perlite D50 of at least 10 or 15 or 20 or 25 or 30 $\mu$m and at most 50 or 45 or 40 or 35 or 30 $\mu$m, preferably from 10 to 30 $\mu$m as an extender for titanium dioxide.

4. The use according to Claim 3 in which the expanded milled perlite has a D95 of at most 75 or at most 70 or at most 65 $\mu$m, preferably at most 65 $\mu$m.

5. A formulation comprising:

   iv) from 5 wt % to 20 wt % preferably from 8 wt% to 15 wt% or 10 wt % to 15 wt % of titanium dioxide;
   v) from 5 wt % to 20 wt % preferably from 8 wt % to 15 wt % or 10 wt% to 15 wt% of the expanded milled perlite as described herein; and
   vi) a binder;

   wherein the formulation has a PVC/CPVC ratio of at least 0.9 or preferably at least 0.95 or more preferably at least 1.0.

6. The formulation according to Claim 5 wherein the binder is selected from vinyl polymers, acrylic polymers, styrenic polymers, polyurethanes, polyethers, polyesters, and combinations thereof.

7. The formulation according to Claim 5 or Claim 6 comprising an aqueous emulsion or a solution in a liquid carrier.

8. The formulation according to any of Claims 5 to 7 containing calcium carbonate.

9. The formulation according to any of Claims 5 to 8, wherein the ratio of PVC/CPVC of the formulation is at least 1.0 or 0.95, most preferably at least 0.9.

10. An article comprising a substrate and a coating on a surface of the substrate, wherein the coating comprises the formulation according to any of Claims 5 to 9.

11. The article according to Claim 9, wherein the $\Delta E$ value of the coating on the substrate is 3 or less or 2 or less, preferably 1.5 or less.

12. The article according to Claim 9 or Claim 10, wherein the chalking value of the coating on the substrate is 2 or less, preferably 1 or less.

Figure 1

## EUROPEAN SEARCH REPORT

**Application Number**

EP 24 30 6380

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/077369 A1 (CANDAU DIDIER [FR] ET AL) 18 March 2021 (2021-03-18) * paragraphs [0010], [0011], [0037] – [0053], [0083] – [0085], [0324] – [0339]; examples 1-4 * | 1-4 | INV. C09D5/02 C09D7/61 C09D7/40 |
| X | US 2022/403202 A1 (MONNIN YANN [FR] ET AL) 22 December 2022 (2022-12-22) * paragraphs [0109] – [0113]; examples 1, 2 * | 5-12 | |
| X | EP 2 998 367 A1 (DAW SE [DE]) 23 March 2016 (2016-03-23) * paragraphs [0023], [0044], [0059]; claims 1-21; examples 1, 3-7; tables 1, 2 * | 3-12 | |
| X | EP 3 974 479 A1 (DAW SE [DE]) 30 March 2022 (2022-03-30) * paragraphs [0020], [0025], [0038], [0060], [0061]; claims 1-26 * | 3,4 | TECHNICAL FIELDS SEARCHED (IPC) |
| A | CN 109 251 651 A (JIANGSU XURAN INFORMATION TECH CO LTD) 22 January 2019 (2019-01-22) * paragraphs [0009], [0014]; examples 1, 2 * | 1-12 | C09D C08K |
| A | CN 105 802 299 A (HUANGHE S & T COLLEGE) 27 July 2016 (2016-07-27) * claims 1-4 * | 1-12 | |
| A | CN 116 082 881 A (ZHONGSHAN FURI PRINTING MAT CO LTD) 9 May 2023 (2023-05-09) * the whole document * | 1-12 | |

The present search report has been drawn up for all claims

| Place of search | Date of completion of the search | Examiner |
|---|---|---|
| Munich | 2 May 2025 | Schmitt, Johannes |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons
........................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 30 6380

This annex lists the patent family members relating to the patent documents cited in the above-mentioned European search report.
The members are as contained in the European Patent Office EDP file on
The European Patent Office is in no way liable for these particulars which are merely given for the purpose of information.

02-05-2025

| Patent document cited in search report | Publication date | Patent family member(s) | Publication date |
|---|---|---|---|
| US 2021077369 A1 | 18-03-2021 | CN 110709050 A | 17-01-2020 |
| | | CN 115444768 A | 09-12-2022 |
| | | EP 3621576 A1 | 18-03-2020 |
| | | ES 2906277 T3 | 18-04-2022 |
| | | FR 3066107 A1 | 16-11-2018 |
| | | US 2021077369 A1 | 18-03-2021 |
| | | WO 2018206764 A1 | 15-11-2018 |
| US 2022403202 A1 | 22-12-2022 | AU 2020382065 A1 | 02-06-2022 |
| | | CA 3157425 A1 | 20-05-2021 |
| | | CN 114729219 A | 08-07-2022 |
| | | EP 3822325 A1 | 19-05-2021 |
| | | EP 4058522 A1 | 21-09-2022 |
| | | US 2022403202 A1 | 22-12-2022 |
| | | WO 2021094578 A1 | 20-05-2021 |
| EP 2998367 A1 | 23-03-2016 | EP 2998367 A1 | 23-03-2016 |
| | | RU 2015139905 A | 23-03-2017 |
| EP 3974479 A1 | 30-03-2022 | NONE | |
| CN 109251651 A | 22-01-2019 | NONE | |
| CN 105802299 A | 27-07-2016 | NONE | |
| CN 116082881 A | 09-05-2023 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 060700695 A

- KR 102386826 B